# EUROPEAN PATENT SPECIFICATION

(11) **EP 0 533 976 B1**
(45) Date of publication and mention of the grant of the patent: **15.05.1996**
(21) Application number: 91116397.0
(22) Date of filing: 26.09.1991
(51) Int. Cl.: G01S 7/52

(54) **Automatic optimization of the image uniformity of an ultrasound imaging system**
Automatische Optimalisierung der gleichmässigen Intensität eines Bildes für ein Ultraschallabbildungsystem
Optimisation automatique de l'uniformité d'image pour un système d'imagerie ultrasonore

(43) Date of publication of application: 31.03.1993
(73) Proprietor: DORNIER MEDIZINTECHNIK GMBH, D-82101 Germering (DE)
(72) Inventor: Grünwald, Sorin, Dipl.-Ing., W-5650 Solingen 19 (DE); Warnking, Reinhard, Dipl.-Ing., W-5650 Solingen (DE)
(74) Representative: Frick, Gerhard, Dipl.-Ing.

(56) References cited:
- EP-A- 0 003 595
- EP-A- 0 220 631
- WO-A-81/00807

## Description

The invention relates to a method and apparatus for the automatic optimization of image uniformity of an ultrasound imaging system (UIS). Such ultrasound imaging systems are especially used in the field of medical examination by means of ultrasound echos.

From the standpoint of instrumentation, the image quality of an ultrasound imaging system is determined by three parameters:
(a) detail resolution, (b) contrast resolution, (c) uniformity throughout the field of view.

These parameters provide objective measures of image quality. The present invention addresses the image quality of an ultrasound imaging system from the point of view of image uniformity.

The image uniformity is determined by the ultrasound attenuation in tissues as well as by several factors related to the settings of the UIS, e.g., transmitted ultrasound power, and signal processing algorithms.

In an UIS of the prior art, controlling the compensation of the ultrasound attenuation in tissues is the only way to control the image uniformity. Because of the technical approach in compensating for the ultrasound attenuation, this compensation method is also called time-gain compensation. In most of the available ultrasound imaging systems of the prior art, the compensation of the ultrasound attenuation is done manually. This manual control asks for a lot of experience from the examiner and takes quite a long time to be accomplished.

In some of the available ultrasound imaging systems, the time-gain compensation can be done automaticly, but other parameters which influence image uniformity, still have to be adjusted manually.

It is an object of the present invention to provide an improved method and apparatus for the optimization of the image uniformity of an ultrasound imaging system.

From EP 0 220 631 A1 it is known to amplify echo signals supplied by an ultrasound transducer in an amplifier having controllable gain and to feed the thus amplified echo signals into an image memory. A control signal generator is provided to output control signals for the amplifier gain. The content of the image memory is transmitted to a histogram buffer in order to have the histogram analyzed by a histogram analyzer to finally generate gain and thereshold values for the control signal generator and a comparator, respectively, which provides breakpoints for tissue identity to the control signal generator. A low-pass filter is used during further signal processing in connection with histogram analyzation. This known system does, however, not make use of a two dimensional low-pass filtering being applied directly to the content of the image memory and does not take into account other factors of influence, like transmission power, grey scale level and target depth, as does the present invention.

According to the present invention, a feed-back loop is implemented based on which the factors are determined which beside ultrasound attenuation influence the image uniformity of an UIS. The variation of these factors with respect to their optimal values is calculated and the results are used in the above mentioned feedback loop in order to drive the system in its optimal state with respect to image uniformity.

Moreover, the feed back loop simultaneously provides an improved automatic attenuation compensation.

The invention will be described in detail with reference to the accompanying drawings:
Fig. 1 is a diagrammatic illustration of an apparatus of the prior art;
Fig. 2 is diagrammatic illustration of an apparatus according to the present invention;

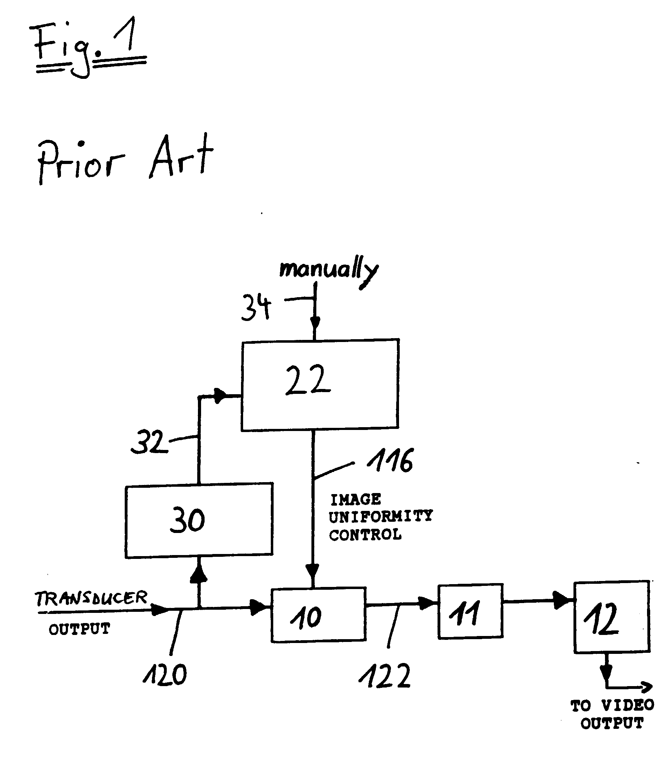

Fig. 1 illustrates a device prior art for the automatic control of the ultrasound attenuation compensation (time gain compensation) in an UIS according to the US 47 33 668. The core of the apparatus is a control signal generator 22. One input signal 32 of the said signal generator 22 comes from a threshold circuit 30. The threshold circuit 30 is used to drive the control signal generator 22 as a function of ultrasound echo patterns coming from the ultrasound transducer output 120. The output signal 116 of the control signal generator 22 drives an amplifier 10 to amplify the output 120 of the ultrasound transducer in order to compensate for the ultrasound attenuation in the examined body. The amplified signal 122 is then A/D-converted (A/D-converter 11) and fed into the image memory 12 of the UIS.

In such a system, the attenuation compensation is the only means for the automatic control of image uniformity. Other influencing factors have to be adjusted manually via a second input 34 of the control signal generator 22.

Thus the time-gain compensation prior art is done by using threshold circuits and by using prior knowledge about characteristic echo patterns.

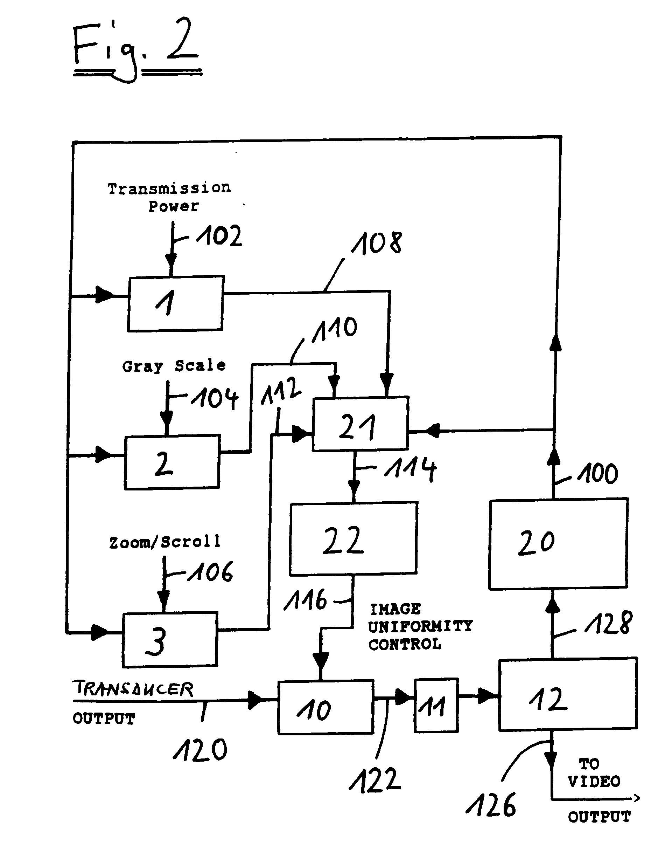

Fig. 2 illustrates a device for the automatic control of image uniformity according to the present invention.

The transducer output signal 120 of the UIS is amplified by the amplifier 10, A/D-converted by the A/D-converter 11 and fed to the image memory 12 of the UIS.

One output 126 of the image memory 12 leads to a video output processor of the UIS. Another output 128 of the image memory 12 is connected with a two-dimensional low-pass spatial filter 20, where the content of the ultrasound image memory 12 is filtered in order to obtain an average amplitude value 100 as output signal. The output signal 100 of the spatial low-pass filter 20 is weighted by the multiplier 1 with a signal 102 proportional to the transmitted ultrasound power of the UIS. Similarly, the output signal 100 of the low-pass filter 20 is weighted by the multiplier 2 with a signal 104 proportional to the grey scale characteristics of the display unit of the UIS and by the multiplier 3 with a signal 106 proportional to the depth of the displayed target, expressed by the zoom/scroll factor of the UIS. By the adder 21, the output signals 108,110,112 of the multipliers 1,2,3 are added with the output signal 100 of the spatial low-pass filter 20. Here the not weighted signal 100 takes into account the ultrasound attenuation in the region of interest in the examined body. The output signal 114 of the adder 21 drives a control signal generator 22 in accordance with the feed-back information to control the gain of the amplifier 10. The output signal 122 of the amplifier 10 represents the optimized ultrasound echo signal with respect to image uniformity.

The described signal paths represent a feed-back loop: the stored ultrasound information is used in order to automaticly adjust the actual values of the factors, that affect image uniformity.

As a result of this invention
- the duration of a medical examination is dramatically reduced
- the reproducibility of the examination is improved
- the reliability of the therapy techniques which are associated with ultrasound imaging systems, e.g. lithotripsy, is improved.

## Claims

1. A method for the automatic optimization of image uniformity of an image to be displayed by an image display of an ultrasound imaging system (UIS) comprising the steps of amplifying in an amplifier (10) the echo signals (120) supplied by an ultrasound transducer and feeding the thus amplified echo signals into an ultrasound image memory (12), using a low-pass filter during further signal processing and finally forming a control signal (116) in order to control the gain of said amplifier (10), the method being characterized by
- applying a two-dimensional low-pass spatial filtering to the content of the ultrasound image memory (12) in order to generate an average amplitude value (100), said average amplitude value (100) taking into account the ultrasound attenuation in the region of interest of the examined body,
- weighting said average amplitude value (100) with a signal (102) proportional to the actual transmitted ultrasound power of the UIS,
- weighting said average amplitude (100) with a signal (104) proportional to the actual grey scale characteristics of the display unit of the UIS, and
- weighting said average amplitude value (100) with a signal (106) proportional to the depth of the displayed target expressed in zoom/scroll factors,
- thereby forming weighted signals (108, 110, 112),
- adding said average amplitude value (100) to said weigthed signals (108, 110, 112) in order to generate a sum signal (114), and
- using said sum signal (114) in order to generate said control signal (116).

2. An apparatus for the automatic optimization of image uniformity of an image to be displayed by an image display of an ultrasound imaging system (UIS), comprising an amplifier (10) to amplify echo signals (120) supplied by an ultrasound transducer, an image memory (12) to receive said echo signals after amplification thereof, a low-pass filter and a control signal generator (22) to control the gain of said amplifier (10) the apparatus further comprising
- a two-dimensional low-pass filter (20) connected to an output (128) of said image memory (12) in order to generate an average amplitude value (100),
- a weighting circuit containing means (1, 2, 3) for weighting said average amplitude value (100) with signals (102, 104, 106) depending on the level of transmitted ultrasound power, on the actual grey scale characteristics and on the actual zoom/scroll factor of the UIS, thereby forming weighted signals (108, 110, 112),
- an adder (21) for adding said average amplitude value (100) to said weighted signals (108, 110, 112) to generate a sum signal (114), the output of said adder (21) being connected to said control signal generator (22).

## Patentansprüche

1. Verfahren zum automatischen Optimieren der Bildgleichmäßigkeit eines durch eine Bilddarstellungsvorrichtung eines Ultraschall-Bilderzeugungssystems (UBS) darzustellenden Bildes, welches die Schritte des Verstärkens in einem Verstärker (10) der von einem Ultraschallwandler gelieferten Echosignale (120) und des Einführens der so verstärkten Echosignale in einen Ultraschallbild-Speicher (12), das Gebrauchens eines Tiefpaßfilters während der weiteren Signalverarbeitung und schließlich des Bildens eines Regelsignals (116) zum Regeln der Verstärkung des genannten Verstärkers (10) enthält, **dadurch gekennzeichnet,** daß
- auf den Inhalt des Ultraschallbild-Speichers (12) eine zweidimensionale räumliche Tießpaßfilterung angewandt wird, um einen Durchschnitts-Amplitudenwert (100) zu erzeugen, welcher die Ultraschalldämpfung in der interessierenden Region des untersuchten Körpers berücksichtigt,
- der genannte Durchschnitts-Amplitudenwert (100) mit einem zur tatsächlich vom UBS ausgesendeten Ultraschalleistung proportionalen Signal (102) gewichtet wird,
- die genannte Durchschnitts-Amplitude (100) mit einem zur tatsächlichen Graustufencharakteristik der Bilddarstellungseinheit des UBS proportionalen Signal (104) gewichtet wird, und
- der genannte Durchschnitts-Amplitudenwert (100) mit einem zur Tiefe des dargestellten Zieles, ausgedrückt in Zoom/Scroll-Faktoren, proportionalen Signal (106) gewichtet wird,
- wodurch gewichtete Signale (108, 110, 112) gebildet werden,
- der genannte Durchschnitts-Amplitudenwert (100) den genannten gewichteten Signalen (108, 110, 112) hinzuaddiert wird, um ein Summensignal (114) zu erzeugen, und
- das genannte Summensignal (114) gebraucht wird, um das genannte Regelsignal (116) zu erzeugen.

2. Vorrichtung für das automatische Optimieren der Bildgleichmäßigkeit eines durch eine Bilddarstellungsvorrichtung eines Ultraschall-Bilderzeugungssystems (UBS) darzustellenden Bildes, mit einem Verstärker (10) zur Verstärkung von durch einen Ultraschallwandler gelieferten Echosignalen (120), einem Bildspeicher (12) zum Empfang der genannten Echosignale nach deren Verstärkung, einem Tiefpaßfilter und einem Regelsignal-Generator (22) zur Regelung der Verstärkung des genannten Verstärkers (10), sowie weiterhin mit
- einem zweidimensionalen Tiefpaßfilter (20), welches an einen Ausgang (128) des genannten Bildspeichers (12) angeschlossen ist, zur Erzeugung eines Durchschnitts-Amplitudenwertes (100),
- einer Gewichtungsschaltung mit Mitteln (1, 2, 3) zum Gewichten des genannten Durchschnitts-Amplitudenwertes (100) mit Signalen (102, 104, 106), welche vom Niveau der ausgesendeten Ultraschalleistung, der tatsächlichen Graustufencharakteristik und dem tatsächlichen Zoom/Scroll-Faktor des UBS abhängen, wodurch gewichtete Signale (108, 110, 112) gebildet werden,
- einem Addierer (21) zum Hinzuaddieren des genannten Durchschnitts-Amplitudenwertes (100) zu den genannten gewichteten Signalen (108, 110, 112) zum Erzeugen eines Summensignales (114), wobei der Ausgang des genannten Addierers (21) mit dem genannten Regelsignal-Generator (22) verbunden ist.

## Revendications

1. Procédé d'optimisation automatique de l'uniformité d'image d'une image que doit afficher un afficheur d'une installation de formation d'images par ultrasons (UIS), qui comprend les étapes d'amplification dans un amplificateur (10) des signaux d'écho (120) fournis par un transducteur d'ultrasons et d'envoi des signaux d'écho ainsi amplifiés dans une mémoire (12) d'images ultrasonores, d'utilisation d'un filtre passe-bas pendant le traitement ultérieur du signal et enfin de formation d'un signal de commande (116) pour commander le gain dudit amplificateur (10),
le procédé étant caractérisé par :
- l'application d'un filtrage spatial passe-bas en deux dimensions au contenu de la mémoire (12) d'images ultrasonores afin de produire une valeur moyenne de l'amplitude (100), ladite valeur moyenne de l'amplitude (100) prenant en compte l'atténuation des ultrasons dans la région du corps examiné à laquelle on s'intéresse,
- une pondération de ladite valeur moyenne de l'amplitude (100) par un signal (102) proportionnel à la puissance ultrasonore réellement transmise de l'installation UIS,
- une pondération de ladite amplitude moyenne (100) par un signal (104) proportionnel à la caractéristique d'échelle de gris réelle de l'unité d'affichage de l'installation UIS, et
- une pondération de ladite valeur moyenne de l'amplitude (100) par un signal (106) proportionnel à la profondeur de la cible affichée, exprimée en facteurs de zoom et de défilement,
- la formation de ce fait de signaux pondérés (108, 110, 112),
- l'addition de ladite valeur moyenne de l'amplitude (100) et desdits signaux pondérés (108, 110, 112) afin de produire un signal somme (114), et
- l'utilisation dudit signal somme (114) pour produire ledit signal de commande (116).

2. Appareil d'optimisation automatique de l'uniformité d'image d'une image que doit afficher un afficheur d'une installation de formation d'images par ultrasons (UIS), qui comprend un amplificateur (10) servant à amplifier des signaux d'écho (120) fournis par un transducteur d'ultrasons, une mémoire d'images (12) recevant lesdits signaux d'échos après leur amplification, un filtre passe-bas et un générateur (22) de signal de commande qui commande le gain dudit amplificateur (10), ledit appareil comprenant en outre :
- un filtre passe-bas à deux dimensions (20) couplé à une sortie (128) de ladite mémoire d'images (12) afin de produire une valeur moyenne de l'amplitude (100),
- des moyens contenant des circuits de pondération (1, 2, 3) pour pondérer ladite valeur moyenne de l'amplitude (100) par des signaux (102, 104, 106) en fonction du niveau de puissance ultrasonore transmise, de la caractéristique d'échelle de gris réelle et des facteurs réels de zoom et de défilement de l'installation UIS, ce qui forme des signaux pondérés (108, 110, 112),
- un sommateur (21) pour additionner ladite valeur moyenne de l'amplitude (100) et lesdits signaux pondérés (108, 110, 112) afin de produire un signal somme (114), la sortie dudit sommateur (21) étant couplée audit générateur (22) de signal de commande.
